Europäisches Patentamt

European Patent Office

Office européen des brevets

(19)

(11) Publication number: **0 280 283 B1**

# EUROPEAN PATENT SPECIFICATION

(12)

(45) Date of publication of patent specification: **25.09.91**  (51) Int. Cl.5: **G01G 19/393, G01G 13/18**

(21) Application number: **88102760.1**

(22) Date of filing: **24.02.88**

Divisional application 90123576.2 filed on 24/02/88.

(54) **Automatic weighing machine.**

(30) Priority: **27.02.87 ES 8700794**
**27.02.87 ES 8700939 U**

(43) Date of publication of application:
**31.08.88 Bulletin 88/35**

(45) Publication of the grant of the patent:
**25.09.91 Bulletin 91/39**

(84) Designated Contracting States:
**AT BE CH DE FR GB GR IT LI LU NL SE**

(56) References cited:
**EP-A- 0 099 238**   **EP-A- 0 196 552**
**DE-B- 2 641 942**   **FR-A- 350 860**
**GB-A- 1 013 130**   **GB-A- 1 126 752**
**GB-A- 2 174 818**

(73) Proprietor: **TALLERES DAUMAR S.A.**
**Wifredo 796**
**Badalona (Barcelona)(ES)**

(72) Inventor: **Guardiola, Agustin Dauder**
**Wifredo 796**
**Badalona (Barcelona)(ES)**

(74) Representative: **Körner, Ekkehard, Dipl.-Ing.**
**Patentanwalt Maximilianstrasse 58**
**W-8000 München 22(DE)**

Rank Xerox (UK) Business Services

## Description

The present invention relates to an automatic weighing maching for food products.

There are known weighing machine for fruit, comprising a relatively high number, for example, ten to fourteen, of containers that are supplied with the products to be weighed, from a common single entry, and that are correlatedly discharged. Said known weighing machines comprise an electronic computer unit making the calculation of the possible combinations of the weights of the products stored in said containers, selecting those containers the sum of weights of which, i.e. the total weight thereof is most approximate to the desired weight, and ordering their discharge onto an exit ccnveyor provided in said machine. The strategy corresponds to the called "associative weighing" in which the product passes by several weighing points, and an electronic computer looks for a combination, the total actual value of which is closest to the nominal desired weight.

There is also known a kind of automatic weighing machine, which- with the intervention of an electronic processing unit effects the individual weighing of the products and their conveyance to respective storage areas, said products being discharged by another transport means, usually in order to supply a packaging machine, when in the respective storage areas a batch of products of adjustable predetermined weight with a predetermined tolerance adjustable by the user is contained. Such machine is known from ES-C-500.951, and the same is weighing each unit of product when entering the machine, and the weighed unit/s is or are directed to the respective storage area/s, so that the processing unit knows permanently the actual weight of the products existing in all and each of the storage areas, in addition to being known the actual weight of the product that is entering the machine. In order that the weight of the products stored in a respective storage area, approaches the prefixed nominal weight (with its upper and lower limits or tolerances also determined) the processing unit looks for, chooses and orders to send to said storage area other product units, the actual weight of which permits to complete a batch of product units with said prefixed final weight, which batch will be next discharged from said storage area onto the transport means arranged underneath the storage area and directed towards the machine exit , in order to deliver it to the packaging machine. The referred strategy corresponds to the called "accumulative weighing" and in the same way the processing unit takes in account, permanently, the actual weights of the batches of products that are temporarily stored in all storage areas of the weighing machine, and mathematically combines them with the actual weights of product units, as the latter are being weighed. In this manner a higher output is obtained , by time unit, of batches of product units with a predetermined final weight, and also the number of rejected units is reduced as compared to the weighing machines known previously to the application date of the ES-C-500.951.

The automatic weighing machine of the present invention utilizes this strategy. The machine corresponds to the type of machines that comprise a support structure or frame of the machine members, actuating means for these members, feeding means of the corresponding product, means for weighing it, storage containers for temporarily storing it, and means for discharging it onto other means for directing it towards the machine exit, and a processing unit which registers the actual weight of the products that in each moment are contained in all and each of the temporary storage areas. When the weight of the product units contained in a corresponding storage area reaches a value prefixed by the machine user, the processing unit orders the discharge of the batch of product units with said final prefixed weight, there being arranged suitable connection means between said processing unit and the respective machine members, and conventional drive, control and safety means and the like of the machine.

The automatic weighing machine for food products of the invention comprises, preferably a hopper, a channel and at least an endless belt conveyer the end of which extends above a series of troughs, open in their upper part in order to receive the product being discharged from said conveyer, circularly arranged and connected, respectively and in overhung arrangement, to corresponding weighing means radially aligned and closer to the center of the machine than to said troughs, said weighing means being connected with the processing unit and mounted on a horizontal platform rotating, through suitable means, about a central vertical axis. Said troughs have at least one of their walls movable, operated by suitable means actuated under the control of the processing unit. Underneath said troughs, a series of fixed storage containers is provided, open in their upper part in order to receive the corresponding product already weighed and with at least one of their walls movable, also operated by suitable means actuated under the control of the processing unit , in order to allow the discharge of each batch of product units of a final predetermined weight, said discharge being effected onto the means for carrying said batches of product towards the machine exit.

The automatic weighing machine for food products of the present invention has, among others, the following advantages, namely, adaptability to a very wide variety of products (peppers, onions, garlics, potatoes, citrics sprouts, apples, nuts, beans and, in general, food products of various sizes), a high cadence production, with a minimum rejection without the risk of fortuitous damage to the initially rejected product due that the same does not exist from its corresponding trough, and a greater regularity in the weight of the obtained batches, with a selfregulation of the supply, according to the final size of the product batches to be obtained.

The automatic weighing machine for food products according to the present invention offers the previously described advantages apart from others that will be derived from the exemplary embodiment of said machine, which is described in detail subsequently, in order to facilitate the understanding of the above referred characteristics, explaining at the same time various details and accompanying, in order if this, a set of drawings in which, only by title of example without limitation of the scope of this invention, is represented an embodiment of the automatic weighing machine of the invention.

In the drawings:

Figure 1
shows an embodiment of the weighing machine in a side elevation view corresponding to a position in which the entry of the machine is arranged towards the observer, said machine presenting several sectioned parts for a better information;

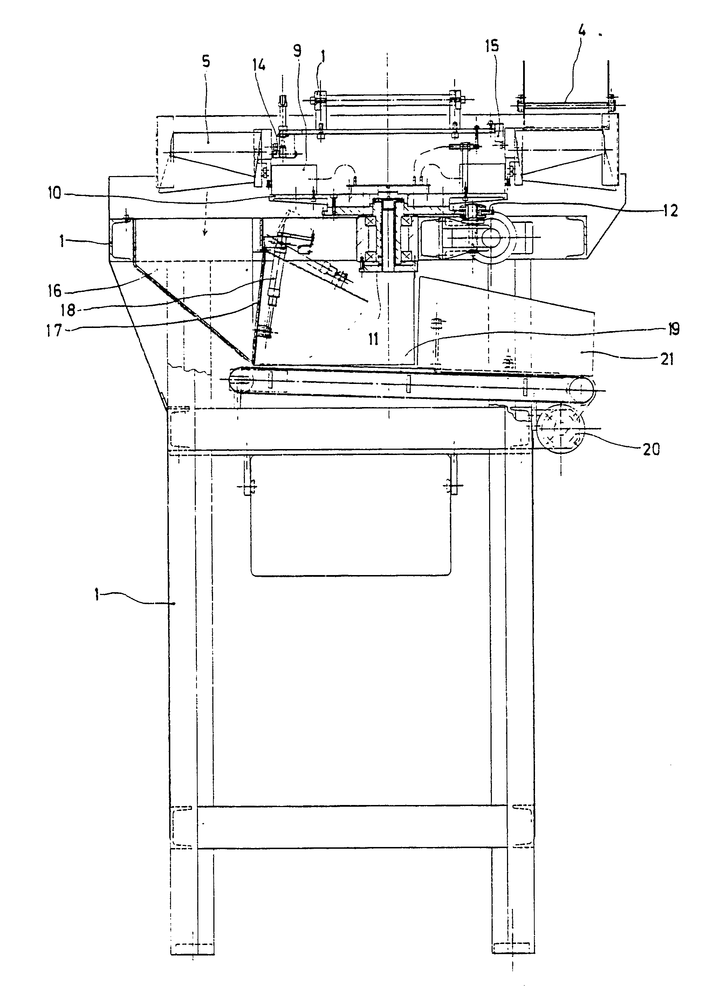

Figure 2
is an upper plan view of the machine according to the figure 1, with the feeding assembly and the rotatable platform provided with troughs;

Figures 3a and 3b
together show an elevation view of the machine in a position in which its exit is orientated towards the observer, with the feeding assembly;

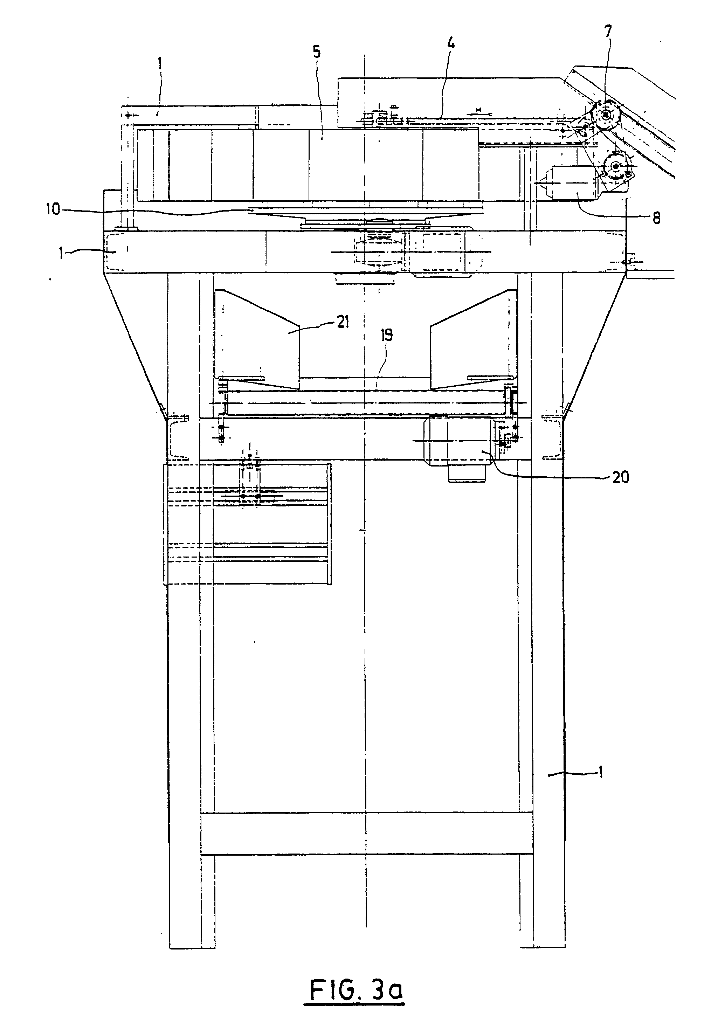

Figure 4
corresponds to an upper plan view in the position represented in figure 3, but in which the rotating platform with the troughs are omitted, whereas the stationary storage containers are visible;

Figure 5
represents an automatic discharging trough in side elevation view, with sectioned parts and showing schematically its mounting in a weighing machine (not illustrated);

Figure 6
is a front elevation view considered from the outer part of the trough according to figure 1;

Figure 7
corresponds to a plan view of the trough according to figure 1, and

Figures 8 and 9
represent, respectively, elevation views of the mechanism for actuating the side walls of the trough, in opened position (for the discharge of the contained product) and in closed operation (in order to be able to retain product).

According to the drawings, the automatic weighing machine for food products comprises a frame 1 for the support and attachment of the several members of the machine, said frame 1 allowing the support on the floor. It is understood that the frame 1 corresponds also to the high or elevated part of the machine, particularly the upper structure of the same which presents, among other members, cams for automatically effect closing and opening of the troughs during their rotational travel.

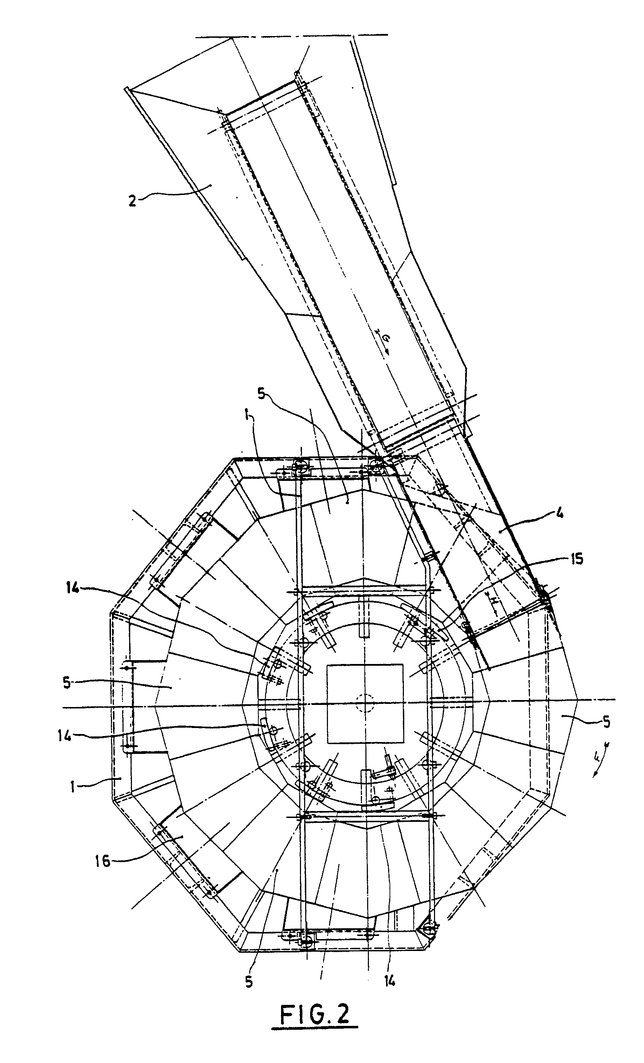

In the entry of the machine there are arranged feeding means for the product, actuated under the control of the processing unit in a form that will be described further on. Said feeding means comprises, in the exemplary case and preferably, a hopper 2 (Fig.2) for charging the product to be weighed, and a channel 3 (Fig.3b) provided with a lift conveyor, extending from the bottom of said hopper 2 and routing the product to an endless belt 4 in a horizontal position in this case, the free end of which i.e. the distal end with respect to the channel 3 terminates above a trough 5 which is one of a series of troughs 5. The endless belt 4 is arranged between two walls that canalizes the product during its transport from the hopper 2 to said free end. The hopper 2 and the channel 3 along with their lift conveyor are mounted so that their inclination can be varied, for example by means of a device 6 (Fig.3b) connected to the frame 1 of the machine and to the frame of the hopper 2 and the channel 3 assembly. Likewise said lift conveyor and said endless belt 4 are synchronously operated by a mechanical transmission 7 ( that also could be electric, or actuated by other conventional drive), which in turn is operated by an electric motor 8, in this case through a reductor. It is obvious that other types of motors may be used as well.

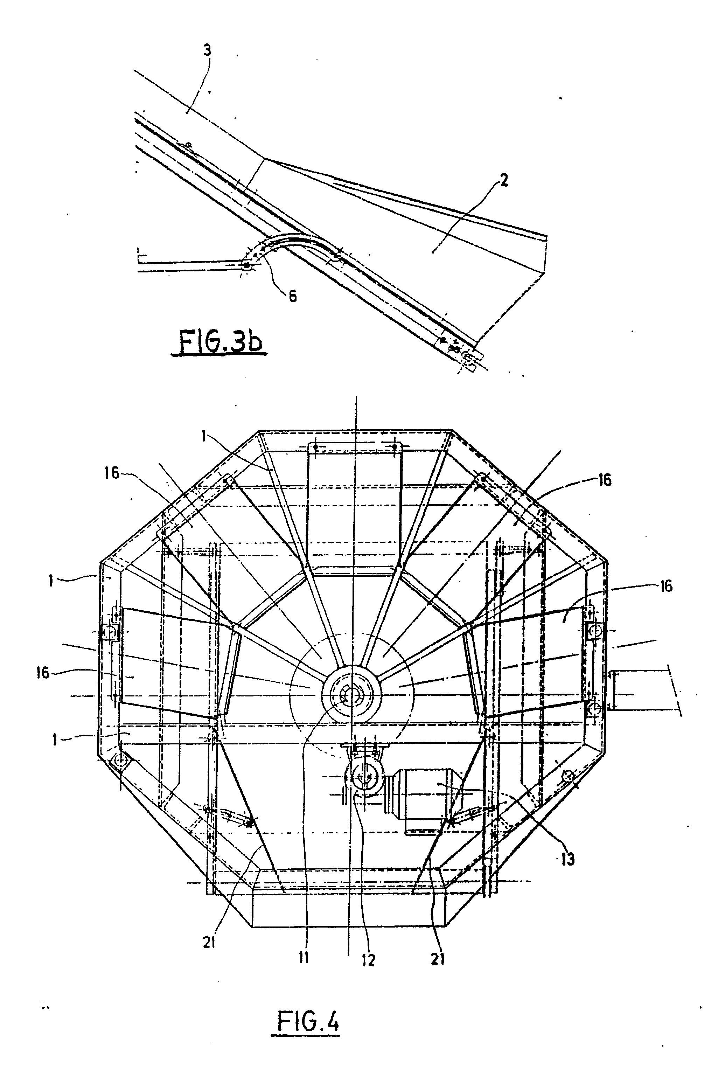

The series of troughs 5 comprises, in the present example, twelve circularly arranged (see particularly figures 2 and 1) troughs 5 and each of them is connected in a overhanging form, to a corresponding weighing means 9 (Fig.1). Said means 9 may be a transducer or other suitable type of charging cell. In the present example twelve weighing means 9 are radially aligned with said troughs 5 but are arranged closer of the center of the rotational axis of the assembly than said troughs 5. The weighing means 9 are mounted, if desired in an adjustable position, on a platform 10, horizontally arranged and rotatable in a vertical axis, to which end the platform 10 is mounted on a guide and support means 11, allowing a gentle rotation of the same, said platform 10 being operated through a transmission means 12 by an electric motor 13, in the present case provided with a reductor or similar, it being also possible to utilize other type of conventional motor. Figure 4 shows in detail the mounting of said electric motor 13, the structured part of the frame 1 and a part of said support means 11.

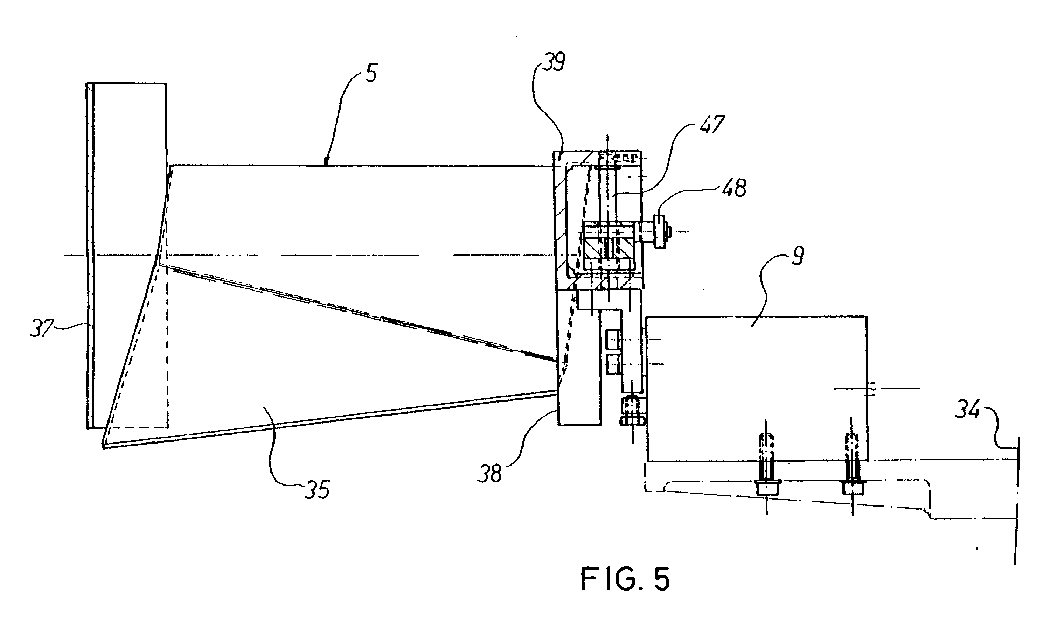

The troughs 5 each are open in their upper part, in order to receive the products delivered by the endless belt 4, which products proceed from the hopper 2. Each trough 5 has at least one of its walls movable, operated by suitable means actuated under the control of the processing unit incorporated in the described weighing machine, and in the present case the movable walls of the troughs 5 are operated by controllable mechanical means, formed by cams 14 and 15 (Fig.1), actuating over the complementary means 48 (Fig. 5) of the troughs 5, so that, as a whole and assuming that the platform 10 rotates clockwise according to the arrow F in figure 2, the movable walls are compelled to be closed by cam 15, before the respective trough 5 passes under the endless belt 4 in order to receive the product discharged by same. Immediately thereafter the corresponding weighing of the product contained in the pertinent trough is effected, after which the movable wall/s of the same will be operated so that they are opened, according to the processing unit, in order to discharge the product into a corresponding temporary storage container to be described in the following. The cams 14 are displaceable by means controlled by the processing unit, in order to place them selectively in their active or in their inactive position, in which first case the discharge of the product from the corresponding trough into a storage container selected by said processing unit is caused. Due to the described correspondence, there are as many cams 14 as storage containers.

Underneath the troughs 5 there are stationary storage containers 16 attached to the frame 1 of the weighing machine, and in this example there are arranged five storage containers (16). Said storage containers 16 are open in their upper part in order to receive the already weighed product, proceeding from a trough 5 which in that instant circulates above said storage container and which, according to the corresponding order given by the processing unit and through suitable means, opens its movable wall/s, thus discharging the product contained in same into said storage container. Each container 16 for temporary storing the product has at least one of its walls 17 movably secured thereto, which is operated by means of a pneumatic cylinder 18 that maintains it in closed position, when its rod is in extended condition, or opens and maintains it in its opened position, when its rod is in retracted condition, as is represented in figure 1, in which is seen that pivoting of the cylinder, through a suitable regulable device, actuates a switch, to detect the cylinder position and to limit the corresponding opening angle, being operated by the actuation of the cylinder 18 in turn controlled by the processing unit, in order to discharge the corresponding batch of the product from the storage container in that location, with the weight and limits of the same predetermined and adjusted by the machine user.

Discharge of each batch of product units from the corresponding fixed storage container 16 is effected onto an endless belt 19, that is operated by an electric motor 20 and through an associated transmission, in order to direct the referred weighed batches of product to the machine exit. The electric motor can be replaced by another type of conventional motor.

It is obvious that the endless belt 19 and the motor 20, with its associated transmission could be replaced by a simple inclined ramp, in order to facilitate the discharge of the referred batches away from the machine, it being possible to utilize other known means to obtain the conveyance or the simple displacement of said batches of product outside of the machine, e.g. in order to supply another machine, in particular a packaging machine.

In order to obtain a better canalization of the batches of product units already weighed, it is possible to arrange two baffle plates 21 orientatable by known means. Some kind of funnel may be useful as well with said purpose, specially in order to direct the batches of product units to the packaging machine that usually follows the weighing machine.

The cylinders 18 can be pneumatic, hydraulic and also can be replaced by mechanical, electric or electromechanical ones, since the stresses to be exerted or supported by said means to operate the movable wall 17 of each storage container 16 are relatively small.

In the zone corresponding to the charging of the troughs 5, i.e. to the discharge or exit of the endless belt 4 may be arranged a track in the form of an arch of circumferences, for the bearing of, for example, free wheels affixed to the inner part of the troughs, in order to avoid an overload of the weighing means 9 when the product falls on the corresponding trough.

The endless belt 4 can be disposed forming a certain angle with the horizontal, apart from this latter position, that is represented in the example being described.

It is convenient that the weighing of each trough 5 with the product contained in same be effected after a certain period of time starting from the discharge of the product from the endless belt into the trough in order to stabilize it and thus attain an exact weight in the associated charging cell 9. To this end a position sensor, as a microswitch, may be provided, the angular displacement of which in relation to the vertical plane is adjustable in order to achieve a correct weighing. When the troughs 5 do not yet contain products the calibration of same is effected, thereby providing information on the tare and the weight of the trough with the corresponding product to the processing unit, whenever there is any variation in these data and in a periodic manner in either case. The cited processing unit operates the driving means of the lift conveyor of the hopper 2 and the endless belt 4, which driving means are variable and regulable in speed, so that the supply speed of the machine is adapted to the type of product and the quantity or weight desired for the final batch of the same, thus obtaining a selfregulation of the supply, with a regular cadence of this supply and, in consequence, of the operation of the weighing machine.

It seems convenient, also because of the economy of the driving means to be utilized, that the rotating speed of the platform 10 be constant, although it would also be convenient that said speed should be regulable.

The command for opening the wall/s of the troughs 5 is effected by the processing unit which decides, according to the strategy to be followed for the same and with the information that it permanently receives in accordance with the referred to above, in which one of the storage containers 16 the corresponding trough 5 should discharge the product actually contained therein, and each storage container is also actuated by the cited processing unit, through the driving means of the movable wall of same, in order to discharge the batch of product of predetermined weight actually contained in the corresponding storage container.

In the event of the product being rejected, because it cannot successfully be combined with the products temporarily stored in the storage containers 16 (which has very small probability in this weighing machine) the trough 5 circulates under the discharge zone of the endless belt 4 without effecting a corresponding discharge, because it is disabled according to the corresponding order given by the processing unit under this condition, so that said trough continues moving around until the processing unit in this second turn of said product contained in said trough arrives to be allowed to be discharged in a storage container 16, thus being eliminated the recirculation of the rejected product until the entry of feeding in the machine, so that in this manner the product is handled more carefully than in the known machines.

The weihing machine described and the subsequent packaging machine will be related in normal line of packaging, by means, for example, of an electric signal or other conventional means, in order to adapt the operation and standstill times of both machines and thus obtain a convenient coupling, maximizing its overall performance.

The data transmission, proceeding from the means and devices mounted in the platform 10 or related with same to the processing unit, can be made by means of infrared rays, optical fibres or by other convenient means, and the electric power supply to the weighing means 9 (charge cells or transducers, etc.) can be effected by mechanical, electrical or other means, including electrical induction, i.e. without cables, thus allowing a higher reliability of said transmission and feeding, and a higher security in same, particularly taking in account that the linkage should be effected through parts and members relatively rotatable.

In the drawings the electric, pneumatic or other fluid connection means are not represented, which are utilized in the machine for connecting the several driving devices of same with, for example, the compressed air equipment and through electrovalves and other accessories for their control and controlled by the processing unit.

The weighing machine may have protection covers and shells for the user and its complete finishing, that can be totally or partially removable in order to provide access to the inner components of the machine.

The operation of this weighing machine is practically derived until now and represented in the drawings. The operation may be summarized in the following manner: the product disposed in the hopper 2 is directed, in the sense of the arrow G, by the lift conveyor through the channnel 3 to the endless belt 4, which continues carrying it according to the arrow H (see figures 2 and 3), and the units of said product conveyed in the detailed form are discharged from the end of the endless belt conveyor distal of the hopper 2, fall into a corresponding trough 5 that, at this time, passes under said end of the endless belt conveyor, while the platform rotates with the troughs 5 and its respective weighing means 9 according to the arrow F (Figure 2), and the means for supplying the units of the products to the entry of the machine are actuated under the control of the processing unit. Each trough 5 that receives the corresponding unit of the product in the described way , continues displacing according to the described circular movement, during a part of which the weighing of same with the product contained therein takes place; subsequently, in its rotational circular movement the actuation of its wall/s is effected to discharge the product into a corresponding storage container 16, when it is ordered by the processing unit, which determines the storage container into which said discharge from each trough 5 is to be effected, the opening of the walls of said troughs being effected by means of the correspondent actuation of one of the cams 14, that activates the corresponding device for the discharge of the product contained in a trough into a storage container selected by the processing unit. Continuing the rotation of the troughs, when same proceed further to the original departure point i.e., to the discharging zone of the endless belt 4, another cam 15 effects closing of the movable walls of the troughs, which thus are now rearranged to receive new units of product conveyed from the hopper 2, repeating the described cycle.

Each time a batch of product units with the desired final weight is obtained in a storage container, (and that has been predetermined by the user, with the tolerances also preset), the processing unit controls the activation of means so that the pneumatic cylinder 18 that effects opening of the movable wall 17 of the corresponding storage container 16, thus discharges said batch onto that endless belt 19 that directs said batch of product towards the exit of the weighing machine, and this process is repeated as many times as proper batches are comprised in each storage container 16.

Summarizing, it results that the machine operates in continued form in the rotation of the assembly formed by the pairs of trough 5 and weighing means 9, whereas the means for supplying the product in the entry in the machine, formed by the hopper 2 with its lift conveyor, the channel 3 and the endless belt 4 are actuated by the processing unit, thus determining a selfregulation of the feeding. In the case in that the product units disposed in one of the troughs 5 should be rejected (because of unsuitable weight for the stategy followed by the processing unit, whereby said product units are not selected to be discharged onto any of the storage containers 16), said trough with rejected product is not caused to discharge and continues conveying said rejected product units under the exit of the endless belt 4 another turn, which endless belt in that moment is stopped, by a corresponding order of the processing unit, in order not to discharge additional product units into said trough already charged in the anterior turn, said trough prosecuting the new cycle, in order to his eventual selection for discharging the product contained in same onto a corresponding storage container 16.

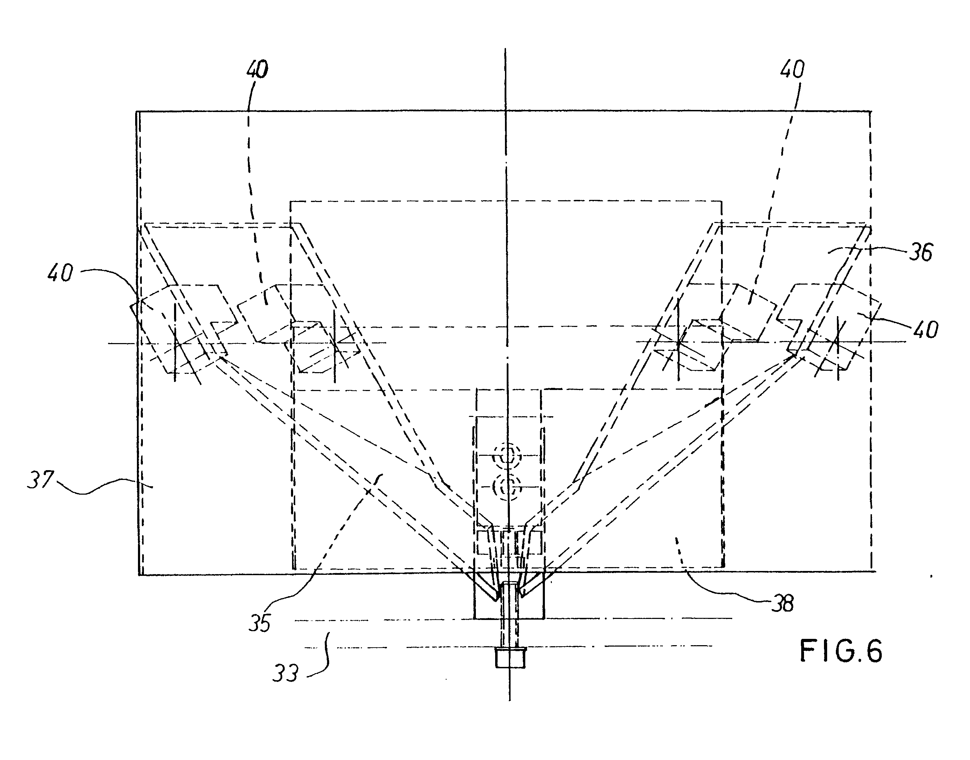

Reference is now made to Figures 5 to 9 of the drawings in which details of an automatic discharge trough 5 of the weighing machine are shown.

According to Fig. 5, the automatic discharge trough is fixed to the respecive weighing means 9, which is mounted on the platform 10, on which are arranged a plurality of similar pairs of trough and weighing means, said pairs being arranged circularly and on a horizontal plane, and rotating together around to a vertical central axis 34 of the weighing machine.

At each trough 5 at least one of its two side walls is pivotally mounted, and in this example its two side walls 35 and 36 are pivotally mounted, each of said walls having a broken shape as is illustrated in the drawings.

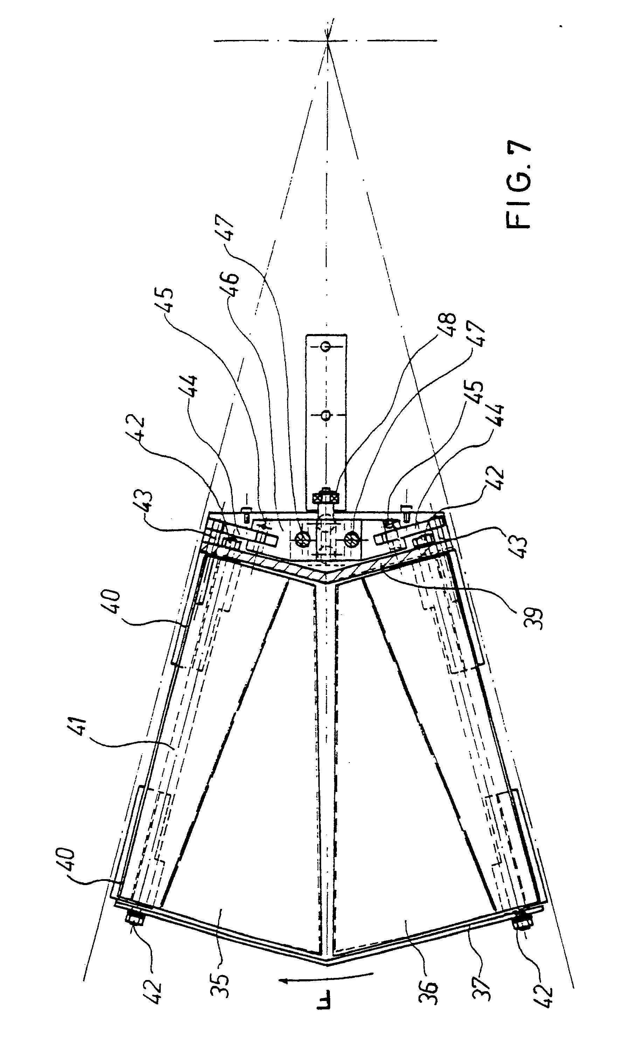

The trough 5 comprises, in addition to said side walls 35 and 36, an external and an internal wall 37 and 38 respectively, the latter being connected, in this example, to a piece 39 having a "C" shaped vertical section which, considered in plan view (figure 7), presents the shape of a very obtuse angle the legs of which are parallel to the sides of the walls 37 and 38, respectively.

The rotation of the series of troughs 5, as previously described, takes place in the sense of the arrow F (Figure 7). Nevertheless, said series of troughs 5 may also be displaced linearly and also according to a broken or mixed trajectory, i.e. composed of right and curved sections, even though the circular trajectory seems the more convenient, in particular because of the minimum space occupied and because of the relative simplicity of this solution in the mechanical aspect.

Each pivotal side wall 35 and 36 has mounted to its outer surface two blocks 40 or the like, aligned and traversed by a rod 41 in its turn fixed at its ends and by means of corresponding nuts 42 to the outer wall 37 of the trough 5 and to the vertical wall of the piece 39. The rod 41 is disposed approximately in radial position with respect to the vertical rotational axis 34 of the assembly and, in this case, in a parallel position to ideal radius, as is shown in Figure 7, allowing the described arrangement to pivot each of the side walls 35 and 36. The pivot rod 41 of each of said walls may be supported at one end only, resting in overhang form, if the mechanical and resistance conditions permit it.

Each of the pivotal side walls 35 and 36 has fixed in its internal block or more approximate to the rotation vertical axis 34 a stud 43 mounted in overhanging form and extending towards said axis, which overhanging stud 43 is situated in a higher level than the rod 41, said overhanging stud 43 penetrating in the hollow portion delimited by the piece 39, passing through a corresponding opening (not illustrated) provided in the vertical portion of the "C" shaped piece 39. Each overhanging stud 43 is hinged to the end of a respective link 44 which in turn and by a pin 45 is hinged to a vertically displaceable slider 46, in this case along two vertical rods 47 which serve to guide said slider 46, the two rods 47 being fixed at their ends between the two horizontal branches of the "C" shaped piece 39 whereby the displaceable slider 46 has vertical through openings 49 traversed by the respective vertical rods 47. It may be utilized only a single vertical guide rod 47 or also more of two of said rods, according to the mechanical conveniences and requirements.

The rod 41 and the stud 43 can be arranged in a horizontal position or proximate to the same, although they may be situated in another convenient inclination. In the ends of the vertical rods 47 can be arranged shock absorber means for the displacement in the upper and lower ends of the stroke of the displaceable slider 46, thereby being obtained also the suppresion of noise produced by virtue of the shock of said displaceable slider 46 with the upper and lower branches of the "C" shaped piece 39, and also may dispose means in order to reduce the friction between the displaceable slider 46 and said rods 47.

The opening provided in the vertical portion of the "C" shaped piece 39 should be the way that it allows the movement of each overhanging stud 43 traversing said piece. The vertically displaceable slider 46 has in its rear part or more proximate to the rotational axis 34 connected a free wheel 48 the axis of which is essentially horizontal and radial, which wheel 48 will be operated, through the corresponding cams 14 and 15, selectively by the weighing machine to determine its rising and lowering, effecting thus and respectively, the opening of its pivotal side walls 35 and 36 or the closing of same.

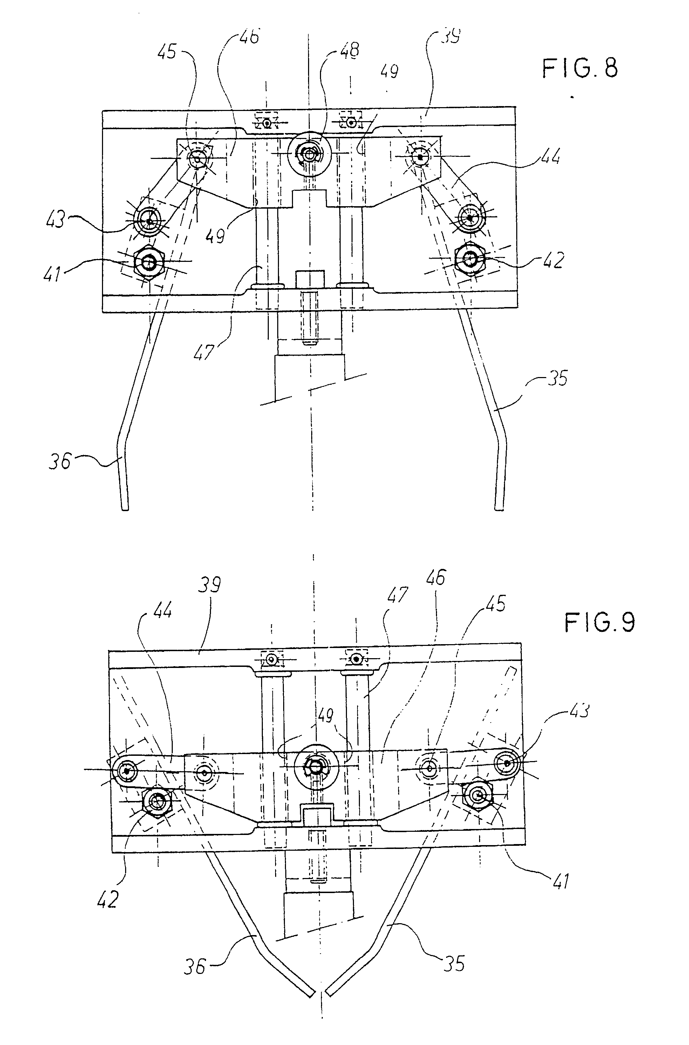

When the displaceable slider 46 is moved, through the free wheel 48 as previously described, to its upper position (see Figure 8) the pivotal movement of the two side walls 35 and 36 on rods 41 is effected, said walls being separated from each other thereby, this corresponding to the opened trough position for the discharge of the product contained in same, and when said displaceable slider 46 is forced to descend and it reaches its lower position (see Figure 9) the closed trough position is obtained in order to receive the products, in which lower position the geometric center of the overhanging stud 43 is situated, in this example and preferably, in a level slightly higher with respect to the geometric center of the pin 45 for the articulation between the link 44 and the displaceable slider 46, so that a certain retention effect in said closed position of the trough 5 is obtained, which favours and secures said position, avoiding that the walls 35 and 36 of the trough 5 open in any case inappropriately, i.e. without being actuated by the free wheel 48 in the described way.

It may be convenient to dispose, in the internal faces of the pivoted side walls of the trough 5, strips, pads, or the like, in order to attenuate the noise during the discharge of the products into the troughs receiving them and for other purposes. Likewise, the free wheel 48 can be replaced by other slide and buffer means, like sliders etc.

## Claims

1. An automatic weighing machine for food products, comprising a support frame (1) for the machine members, driving means for said machine members, feeding means (2,3,4) for the product, an electronic processing unit controlling the operation of the machine members, a series of troughs (5) circularly mounted to a horizontal platform (10) rotating about a central vertical axis (34) and supplied with the products by said feeding means (2,3,4), said feeding means (2,3,4) comprising at least an endless belt conveyor (4), the extremity of which terminates above one of said troughs (5), each trough (5) being connected to an associated weighing means (9) supplying weight information to said processing unit, each of said troughs (5) being provided with walls (35,36) at least one of which is movably mounted to be opened and closed in order to discharge and retain the product contained in the trough (5) and operable by suitable means (14) controlled by the processing unit for at least opening said wall, a plurality of stationary storage containers (16) circularly arranged beneath said troughs (5) and open in their upper part to receive the products discharged from said troughs (5) and each one being provided with at least one movable wall (17) operated by suitable means (18) controlled by the processing unit in order to allow the discharge of the products contained in said storage container (16) onto means (19) for directing said products towards a machine exit.

2. An automatic weighing machine according to claim 1, wherein the driving means for said endless belt conveyor (4) are variable and regulable in speed.

3. Automatic weighing machine according to claim 1, wherein at each trough (5) at least one of its two side walls (35,36) is pivotally mounted on a respective essentially horizontal rod (41) arranged approximately radially with respect to the vertical axis (34) and supported at one or at both ends thereof, the rear of which is mounted at a piece (39), the vertical section of which is "C" shaped, to which pivotal wall (35,36) is connected a stud (43) essentially horizontally situated in a level higher than the rod (41) and extending backwards, protruding into the hollow portion of said "C" shaped piece (39) through an opening, said stud (43) being articulatedly connected to the end of a link (44) hinged at its other end to a slider (46) vertically displaceable along at least one vertical guide rod (47) fixed at its ends between the two horizontal branches of the "C" shaped piece (39) and traversing a corresponding vertical through opening (49) in the displaceable slider (46), and in that the shape of said opening of the "C" shaped piece (39) allows the movement of the stud (43), produced by virtue of its articulated connection, through the link (44), to the displacement slider (46) which is operated by suitable means (14, 15) provided in the weighing machine, with the aid of a cam follower (48), extending essentially horizontally and radially and connected to said displaceable slider (46) in its rear part, the closed trough position being attained when the displaceable slider (46) is in its lower position, in which the geometric center of the stud (43) is situated in a level slightly higher with respect to the geometric center of the axis of articulation between the displaceable slider (46) and the link (44), whereas the open trough position being attained in the upper position of the displaceable slider (46).

4. Automatic weighing machine according to claim 3, wherein said cam follower is a free wheel (48), the axis of which is essentially horizontal and radial and connected to said slider (46).

**Revendications**

1. Machine automatique de pesage pour produits alimentaires, comprenant un bâti de support (1) pour les éléments de la machine, des moyens d'entraînement pour ces éléments de machine, des moyens d'introduction (2, 3, 4) pour le produit, une unité de traitement électronique commandant le fonctionnement des éléments de machine, une série de trémies (5) disposées de façon circulaire sur une plateforme horizontale (10) qui est montée rotative autour d'un axe vertical central (34) et auxquelles les produits sont amenés par les moyens d'introduction (2, 3, 4), ces derniers comprenant au moins un transporteur à bande sans fin (4) dont l'extrémité s'arrête au-dessus de l'une des trémies (5), chaque trémie (5) étant reliée à des moyens associés de pesage (9) envoyant des informations de poids à l'unité de traitement, chacune des trémies (5) présentant des parois (35, 36) dont au moins l'une est montée de façon mobile de manière à être ouverte et fermée en vue de décharger ou de retenir le produit contenu dans la trémie (5), cette paroi étant agencée de façon à pouvoir être actionnée par des moyens appropriés (14) commandés par l'unité de traitement au moins en vue de l'ouverture de cette paroi, plusieurs récipients fixes de stockage (16) disposés de façon circulaire au-dessous des trémies (5) et ouverts à leur partie supérieure afin de recevoir les produits déchargés à partir de ces trémies (5), chaque récipient (16) comportant au moins une paroi mobile (17) actionnée par des moyens appropriés (18) commandés par l'unité de traitement en vue de permettre le déchargement des produits, contenus dans ce récipient de stockage (16), sur des moyens (19) permettant de diriger ces produits vers une sortie de la machine.

2. Machine automatique de pesage suivant la revendication 1, dans laquelle les moyens d'entraînement prévus pour le transporteur à bande sans fin (4) ont une vitesse qui est variable et peut faire l'objet d'une régulation.

3. Machine automatique de pesage suivant la revendication 1, dans laquelle, sur chaque trémie (5), au moins l'une de ses deux parois latérales (35, 36) est montée de façon pivotante sur une tige essentiellement horizontale (41) associée qui est disposée de manière approximativement radiale par rapport à l'axe vertical (34) et est supportée à l'une de ses deux extrémités ou aux deux et dont l'arrière est monté sur une pièce (39) dont la section verticale est en forme de "C", tandis qu'un doigt (43) est solidaire de cette paroi pivotante (35, 36), ce doigt (43) étant situé, d'une manière essentiellement horizontale, à un niveau supérieur à la tige (41) et s'étendant vers l'arrière, en faisant saillie, à travers une ouverture, dans la partie creuse de la pièce (39) en forme de "C", ce doigt (43) étant rendu solidaire de façon articulée de l'extrémité d'une biellette (44) articulée à son autre extrémité sur un coulisseau (46) déplaçable verticalement le long d'au moins une tige verticale de guidage (47) fixée à ses extrémités entre les deux branches horizontales de la pièce (39) en forme de "C" et traversant une ouverture traversante verticale correspondante (49) ménagée dans le coulisseau déplaçable (46), et en ce que la forme d'ouverture de la pièce (39) en forme de "C" permet le mouvement du doigt (43) qui est produit grâce à sa liaison articulée, par l'intermédiaire de la biellette (44), avec le coulisseau déplaçable (46) qui est actionné par des moyens appropriés (14, 15) prévus dans la machine de pesage, à l'aide d'un organe suiveur de came (45) à orientation essentiellement horizontale et radiale et relié au coulisseau déplaçable (46) dans sa partie arrière, la position fermée de la trémie étant atteinte lorsque le coulisseau déplaçable (46) est dans sa position inférieure, dans laquelle l'axe géométrique du doigt (43) est situé à un niveau légèrement supérieur à l'axe géométrique de l'axe d'articulation entre le coulisseau déplaçable (46) et la biellette (44), tandis que la position ouverte de la trémie est atteinte dans la position supérieure du coulisseau déplaçable (46).

4. Machine automatique de pesage suivant la revendication 3, dans laquelle l'organe suiveur de came est un galet libre (48) dont l'axe est essentiellement horizontal et radial et est solidaire du coulisseau (46).

**Patentansprüche**

1. Automatische Wägemaschine für Lebensmittelprodukte, enthaltend einen Tragrahmen (1) für die Maschinenelemente, eine Antriebseinrichtung für die Maschinenelemente, Fördereinrichtungen (2,3,4) für das Produkt, eine elektronische Prozessoreinheit, die den Betrieb der Maschinenelemente steuert, eine Serie von Mulden (5), die kreisförmig an einer horizontalen Plattform (10) befestigt sind, die um eine vertikale Mittenachse (34) rotiert, und die von der Zuführeinrichtung (2,3,4) mit den Produkten versorgt werden, wobei die Zuführeinrichtung (2,3,4) wenigstens einen endlosen Bandförderer (4) enthält, dessen Ende über einer der Mulden (5) endet, jede Mulde (5) mit einer zugehörigen Wägeeinrichtung (9) verbunden ist, die Gewichtsinformation an die Prozessoreinheit liefert, jede der Mulden (5) Wände (35,36) aufweist, von denen wenigstens eine beweglich montiert ist, um geöffnet und geschlossen zu werden, um das in der Mulde (5) enthaltene Produkt abzugeben und zurückzuhalten, und die durch geeignete Einrichtungen (14) betätigbar ist, die von der Prozessoreinheit gesteuert sind, um die genannte Wand wenigstens zu öffnen, wobei eine Vielzahl von stationären Speicherbehältern (16) kreisförmig unterhalb der Mulden (5) angeordnet und in ihrem oberen Abschnitt offen sind, um die von den Mulden (5) abgegebenen Produkte aufzunehmen, und die jeweils mit einer beweglichen Wand (17) versehen sind, die durch geeignete Einrichtungen (18) betätigt wird, die von der Prozessoreinheit gesteuert werden, um die Abgabe der in dem Speicherbehälter (16) enthaltenen Produkte auf Einrichtungen (19) zum Leiten der Produkte gegen einen Maschinenausgang zu ermöglichen.

2. Automatische Wägemaschine nach Anspruch 1, bei der die Antriebseinrichtungen für den endlosen Bandförderer (4) in der Geschwindigkeit variabel und regelbar sind.

3. Automatische Wägemaschine nach Anspruch 1, bei der bei jeder Mulde (5) wenigstens eine der zwei Seitenwände (35,36) schwenkbar an einem zugehörigen, im wesentlichen horizontalen Stab (41) gelagert ist, der etwa radial in Bezug auf die vertikale Achse (35) angeordnet und an einem oder an beiden Enden abgestützt ist, von denen das hintere an einem Teil (39) befestigt ist, dessen vertikaler Schnitt "C"-förmig ist, an welcher schwenkbaren Wand (35,36) ein Zapfen (43) angebracht ist, der im wesentlichen horizontal in einer Höhe angeordnet ist, die höher liegt, als der Stab (41) und sich nach rückwärts erstreckt und in den hohlen Abschnitt des "C"-förmigen Teils (39) durch eine Öffnung vorsteht, wobei der Zapfen (43) gelenkig mit dem Ende eines Lenkers (44) verbunden ist, der an seinem anderen Ende an einem Gleitstück (46) angelenkt ist, das vertikal längs wenigstens eines vertikalen Führungsstabes (47) verschiebbar ist, der an seinen Enden zwischen den beiden horizontalen Schenkeln des "C"-förmigen Teils (39) befestigt ist und eine zugehörige vertikale Durchgangsöffnung (49) in dem verschiebbaren Gleitstück (46) durchquert, und daß die Gestalt der Öffnung des "C"-förmigen Teils (39) die Bewegung des Zapfens (43) ermöglicht, die aufgrund seiner gelenkigen Verbindung über den Lenker (44) mit dem verschiebbaren Gleitstück (46) hervorgerufen wird, das durch geeignete Einrichtungen (14,15) betätigt wird, die in der Wägemaschine vorgesehen sind, mit Hilfe eines Nokkenfolgers (48), der sich im wesentlichen horizontal und radial erstreckt und mit dem verschiebbaren Gleitstück (46) in dessen hinteren Abschnitt verbunden ist, wobei die geschlossene Muldenstellung erzielt ist, wenn sich das verschiebbare Gleitstück (46) in seiner unteren Stellung befindet, in der die geometrische Mitte des Zapfens (43) in einer Höhe liegt, die geringfügig höher in Bezug auf die geometrische Mitte der Schwenkachse zwischen dem verstellbaren Gleitstück (46) und dem Lenker (44) ist, während die offene Muldenstellung in der oberen Position des verschiebbaren Gleitstücks (46) erreicht ist.

4. Automatische Wägemaschine nach Anspruch 3, bei der der Nockenfolger ein freilaufendes Rad (48) ist, dessen Achse im wesentlichen horizontal und radial ist und mit dem Gleitstück (46) verbunden ist.

FIG.2

FIG. 3a

FIG.3b

FIG.4

14

FIG. 5

FIG.6

FIG.7

FIG. 8

FIG. 9